# EUROPÄISCHE PATENTSCHRIFT

(11) **EP 3 946 969 B1**
(45) Veröffentlichungstag und Bekanntmachung des Hinweises auf die Patenterteilung: **05.06.2024**
(21) Anmeldenummer: 20715673.8
(22) Anmeldetag: 12.03.2020
(51) Int. Cl.: B60B 35/00, F16D 55/00

(54) **FAHRWERK VORZUGSWEISE NUTZFAHRZEUG-FAHRWERK**
CHASSIS, PREFERABLY UTILITY VEHICLE CHASSIS
CHÂSSIS ROULANT, DE PRÉFÉRENCE CHÂSSIS ROULANT DE VÉHICULE UTILITAIRE

(30) Priorität: 26.03.2019 DE 102019107673
(43) Veröffentlichungstag der Anmeldung: 09.02.2022
(73) Patentinhaber: BPW Bergische Achsen KG, 51674 Wiehl (DE)
(72) Erfinder: ALT, Marie Kristin, 51674 Wiehl (DE); LÖHE, Frank, 53809 Ruppichteroth (DE); MAGYAR, Francisca, 51580 Reichshof (DE)
(74) Vertreter: DREISS Patentanwälte PartG mbB
(86) Internationale Anmeldenummer: PCT/DE2020/100178
(87) Internationale Veröffentlichungsnummer: WO 2020/192831

(56) Entgegenhaltungen:
- DE-U1- 20 006 217
- US-A- 6 024 418
- US-A1- 2003 234 518
- US-A1- 2007 199 763
- US-B1- 6 412 879
- US-B2- 8 109 000

## Beschreibung

Die Erfindung betrifft ein Fahrwerk, vorzugsweise Nutzfahrzeug-Fahrwerk, mit einer sich quer zur Fahrzeuglängsrichtung erstreckenden und fahrzeugaußen mit einer Radnabenlagerung versehenen Fahrzeugachse, die sich in ihrer Achslängsrichtung aus einzelnen, starr miteinander verbundenen Achsabschnitten zusammensetzt, und mit einem an der Fahrzeugachse befestigten, mindestens eine Fahrwerkskomponente des Fahrwerks tragenden Anschlusselement.

Ein Fahrwerk mit einer solchen Fahrzeugachse ist aus der US 4,311,216 bekannt. An einem Rohrabschnitt einer mit einer Scheibenbremse ausgerüsteten Fahrzeugachse ist ein den Rohrabschnitt umgebender Flansch befestigt. Der Flansch ist mit mehreren, insgesamt auf einem Ring angeordneten und parallel zur Achslinie der Fahrzeugachse ausgerichteten Befestigungsöffnungen versehen. Unter Nutzung der Befestigungsöffnungen ist ein Anschlusselement axial gegen den Flansch geschraubt. Das Anschlusselement trägt seinerseits, über eine weitere axiale Erweiterung und tangentiale Verschraubung, eine der Fahrwerkskomponenten des Fahrwerks, nämlich den Bremssattel der Scheibenbremse. Das Dokument US 2007/199763 A1 zeigt eine weitere Fahrzeugachse mit zur Befestigung der Scheibenbremse dienenden Anschlusselementen.

Mit der Erfindung soll ein Fahrwerk und vorzugsweise ein Nutzfahrzeug-Fahrwerk geschaffen werden, dessen Fahrzeugachse besonders variabel hinsichtlich der mechanischen Ankopplung verschiedener Fahrwerkskomponenten ist.

Zur **Lösung** dieser Aufgabe wird ein Fahrwerk mit den Merkmalen des Patentanspruchs 1 und ein als ein Vollring oder ein Teilring gestaltetes Anschlusselement mit den Merkmalen des Patentanspruchs 17 vorgeschlagen.

Zentrales Element bei beiden Lösungen ist das auf der Achslinie der Fahrzeugachse angeordnete bzw. anzuordnende Anschlusselement, welches die Achslinie in Gestalt eines Voll- oder Teilrings umgibt. Hierbei wird unter einem Vollring ein vollständig geschlossener Ring verstanden. Ist das Anschlusselement hingegen als ein Teilring gestaltet, wird hierunter ein unvollständiger, also auf einem Umfangsabschnitt unterbrochener Ring verstanden, z.B. ein Dreiviertelring. Schließlich kann das Anschlusselement auch als ein mehrteiliger Vollring gestaltet sein, zum Beispiel als ein Ring, der aus einzelnen Umfangssegmenten zusammengesetzt ist, die vorzugsweise in Umfangsrichtung miteinander verbunden oder verklammert sind.

Das ringförmige Anschlusselement ist mit seinem Innenmantel, zumindest in einzelnen Bereichen, radial gegen einen Achsabschnitt der Fahrzeugachse abgestützt. Ferner ist das Anschlusselement auf mindestens einem Umfangsabschnitt seines Außenmantels mit einer Anschlussfläche versehen. Die Anschlussfläche dient der Befestigung der Fahrwerkskomponente, wobei die Art der Fahrwerkskomponente nicht festgelegt ist, sondern diese fahrwerksspezifisch je nach Anwendung oder Bestimmung variieren kann. Zum Beispiel kann die Anschlussfläche dazu dienen, dort ein Achsführungselement des Fahrwerks anzuschließen, z. B. einen Längs- oder Querlenker zum Führen der Fahrzeugachse. Jedoch kann die an der Anschlussfläche zu befestigende Fahrwerkskomponente auch z. B. ein Stabilisator sein, eine Bremskonsole, eine Stoßdämpferkonsole oder ein Federelement des Fahrwerks und insbesondere Nutzfahrzeug-Fahrwerks.

Erfindungsgemäß ist das ringförmige Anschlusselement auf seinem Außenmantel nicht nur mit einer einzelnen Anschlussfläche versehen, sondern, zur Befestigung weiterer Fahrwerkskomponenten, auf weiteren Umfangsabschnitten mit weiteren Anschlussflächen. Die einzelnen Anschlussflächen können unterschiedlich gestaltet sein. Ferner können sie hinsichtlich ihrer Ausrichtung zur zentralen Achslinie unterschiedlich angeordnet sein. Das Anschlusselement kann radiale Durchgangsbohrungen für die Befestigung auf dem Getriebegehäuse aufweisen.

Insgesamt wird ein Fahrwerk geschaffen, dessen Fahrzeugachse besonders variabel hinsichtlich der mechanischen Ankopplung unterschiedlicher Fahrwerkskomponenten ist, so dass sich eine erhöhte Varianz beim Anschließen möglicher Fahrwerkskomponenten ergibt. Insbesondere besteht so die Möglichkeit, an ein- und dieselbe Grundversion der Fahrzeugachse je nach geforderter Anwendung entsprechende Fahrwerkskomponenten anzuschlie-ßen.

Die angestrebte Variabilität kann aber auch in der Möglichkeit bestehen, das Anschlusselement durch ein anderes, mit anderen spezifischen Anschlussflächen versehenes Anschlusselement zu ersetzen. Das Anschlusselement bzw. jedes Anschlusselement ist daher ein Universalelement, an welchem sich an verschiedenen Positionen des Umfangs Fahrwerkskomponenten wie z. B. Stoßdämpfer, Längslenker, Querlenker, Stabilisatoren, eine Bremskonsole oder ein Federelement befestigen lassen. Deren Befestigung kann zum Beispiel mittels Verschraubungen erfolgen.

Vorteilhafte Ausgestaltungen des Fahrwerks und des Anschlusselements sind in den jeweiligen Unteransprüchen angegeben.

Gemäß einer Ausgestaltung des ringförmigen Anschlusselements erstreckt sich die oder jede Anschlussfläche über die gesamte Breite des Anschlusselements. Diese Ausgestaltung hat fertigungstechnische Vorteile, da die Anschlussflächen durch Fräsprozesse gefertigt werden können, wobei das Fräswerkzeug parallel zu der gedachten Achslinie zugestellt wird.

Gemäß einer weiteren Ausgestaltung des ringförmigen Anschlusselements ist die oder jede Anschlussfläche ein plan gestalteter Umfangsabschnitts des Außenmantels. Auch diese Ausgestaltung hat fertigungstechnische Vorteile bei der Bearbeitung der betreffenden Anschlussfläche in einem Fräsprozess.

Gemäß einer weiteren Ausgestaltung des Anschlusselements ist die oder ist mindestens eine Anschlussfläche unter einem Winkel zwischen 0 ° und 45 ° und vorzugsweise abweichend von 0 ° zu einer gedachten Tangente an den Innenmantel angeordnet.

Mindestens eine der Anschlussflächen kann dadurch charakterisiert sein, dass diese parallel zu einer gedachten Tangente an den Innenmantel angeordnet ist, wobei allerdings die gedachte Flächennormale, welche sich genau im Zentrum dieser Anschlussfläche befindet, die Achslinie des Innenmantels nicht schneidet.

Der radiale Abstand der Anschlussflächen zur Achslinie und zum Innenmantel des Anschlusselements kann von Anschlussfläche zu Anschlussfläche unterschiedlich groß sein.

Für eine einfache Befestigung der Fahrwerkskomponente an der Anschlussfläche ist eine weitere Ausgestaltung des Anschlusselements dadurch gekennzeichnet, dass in jede Anschlussfläche mindestens ein Gewindeloch mündet. Je nach den Festigkeitsanforderungen der Verbindung können in der jeweiligen Anschlussfläche auch zwei oder mehr Gewindelöcher vorhanden sein, um die jeweilige Fahrwerkskomponente ausreichend an dem Anschlusselement zu fixieren.

Gemäß einer weiteren Ausgestaltung ist der Innenmantel des Anschlusselements radial gegen einen Gehäuseabschnitt eines Gehäuses abgestützt, welches außerdem noch weitere Gehäuseabschnitte umfasst. Das Gehäuse bildet einen Achsabschnitt der Fahrzeugachse und erstreckt sich daher auf der Achslinie der Fahrzeugachse.

Das Gehäuse kann zum Beispiel dazu dienen, das Getriebe eines elektrischen Fahrantriebs aufzunehmen, vorzugsweise in der Getriebebauart eines Planetengetriebes. Diese Funktion des Gehäuses bietet sich dann an, wenn die Fahrzeugachse eine elektrisch angetriebene Fahrzeugachse ist.

Das Anschlusselement umgibt in Ringform einen Gehäuseabschnitt, der aber nur einen Teil der Gesamtlänge des Gehäuses bildet. Das Anschlusselement ist mit seinem vorzugsweise zylindrischen Innenmantel radial auf dem vorzugsweise ebenfalls zylindrischen Gehäuseabschnitt abgestützt.

Der Gehäuseabschnitt ist vorzugsweise über Schrauben oder über Bolzen mit dem Anschlusselement verbunden. Vorzugsweise sind die Schrauben bzw. Bolzen radial in Bezug auf die Achslinie angeordnet. Ferner ist bevorzugt, dass sich die Schrauben bzw. Bolzen durch radiale Durchgangsbohrungen in dem Anschlusselement erstrecken, und sie in Sacklöcher bzw. Gewindesacklöcher in dem Gehäuseabschnitt eingreifen.

Um bei der Fahrwerksmontage zu verhindern, dass das Anschlusselement falsch herum montiert wird, sieht eine Ausgestaltung vor, dass die der Befestigung des Gehäuses dienenden Schrauben bzw. Bolzen in Umfangsrichtung des Anschlusselements in ungleichmäßigen Abständen angeordnet sind. Würde das Anschlusselement verkehrt herum an dem Gehäuse und insbesondere Getriebegehäuse befestigt, so würden die Positionen der Schrauben bzw. Bolzen nicht mehr mit den Positionen der entsprechenden Gewindesacklöcher in dem Gehäuse übereinstimmen.

Ebenfalls mit dem Ziel der Vermeidung einer Fehlmontage des Anschlusselements wird vorgeschlagen, dass sich das Anschlusselement in Längsrichtung der Fahrzeugachse zwischen einer ersten Stirnseite und einer zweiten Stirnseite erstreckt, und dass die Schrauben bzw. Bolzen näher zu einer der Stirnseiten, als zu der anderen der Stirnseiten angeordnet sind. Auch dies verhindert eine Fehlmontage, denn diese wäre sofort an der in Achsrichtung nicht stimmigen Position der Schrauben bzw. Bolzen erkennbar.

Weitere Vorteile und Einzelheiten ergeben sich aus der nachfolgenden Beschreibung von Ausführungsbeispielen, welche auf der Zeichnung wiedergegeben sind. Es zeigen:
- Fig. 1:: in einer perspektivischen Gesamtdarstellung eine aus einzelnen, starr miteinander verbundenen Achsabschnitten zusammengesetzte Fahrzeugachse eines Nutzfahrzeug-Fahrwerks, wobei in die Fahrzeugachse ein elektrischer Antrieb integriert ist;
- Fig. 2:: den in Fig. 1 mit "II" bezeichneten Achsabschnitt der Fahrzeugachse, jedoch ohne die Radnabe und ohne die Scheibenbremse;
- Fig. 3:: den Achsabschnitt der Fig. 2 in einer Ansicht;

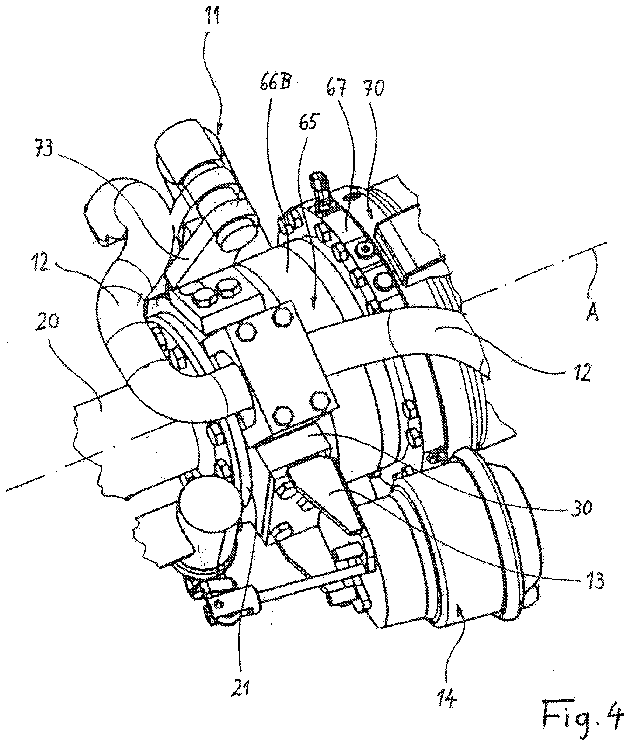

- Fig. 4:: den in Fig. 1 mit "IV" bezeichneten Abschnitt der Fahrzeugachse;
- Fig. 5:: einen Achsabschnitt der Fahrzeugachse in der Bauart als Getriebegehäuse;
- Fig. 6:: das Getriebegehäuse in perspektivischer Darstellung;
- Fig. 7:: in perspektivischer Darstellung ein als Vollring gestaltetes Anschlusselement, welches Bestandteil der Fahrzeugachse ist;
- Fig. 8:: dasselbe Anschlusselement, in Längsrichtung betrachtet und teilweise geschnitten;
- Fig. 9:: dasselbe Anschlusselement mit zusätzlicher Illustration einzelner Konsolen, welche außen an das Anschlusselement anschraubbar sind.

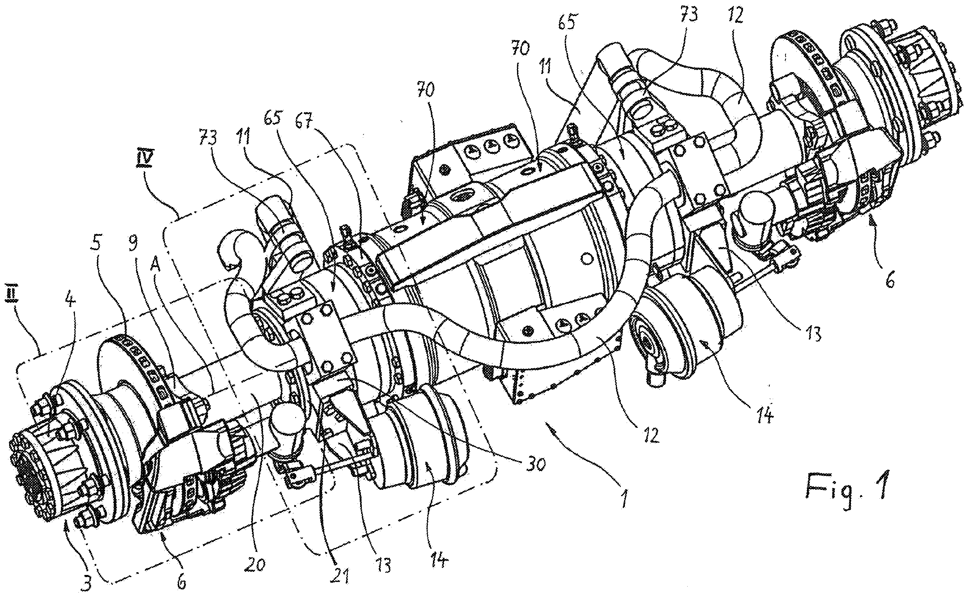

Die Fig. 1 zeigt in einer Übersichtsdarstellung eine Fahrzeugachse 1, welche das zentrale Element eines Fahrwerks und hier speziell eines Nutzfahrzeug-Fahrwerks ist. Die Fahrzeugachse 1 ist von insgesamt starrer Bauart, d. h. sie verhält sich in ihrer Gesamtheit wie ein starrer Achskörper. An beiden Enden ist die Fahrzeugachse 1 jeweils mit einem Achsschenkel versehen, auf dem mittels einer Radnabenlagerung 3 die Radnabe 4 mit dem Fahrzeugrad gelagert ist. Mit der Radnabe 4 verbunden ist die Bremsscheibe 5 einer Scheibenbremse 6.

Die Fahrzeugachse 1 ist eine angetriebene Achse mit einem integrierten elektrischen Abtrieb, wozu in der Mitte der Fahrzeugachse zwei Elektromotoren mit jeweils einem daran angeflanschten Getriebe angeordnet sind. Das Antriebsmoment gelangt über eine auf der Achslinie A der Fahrzeugachse 1 rotierende Antriebswelle nach fahrzeugaußen zu der Radnabe 4.

Auf der Achslinie A, welche durch die Drehachse der Radnabenlagerungen 3 definiert ist, sind von fahrzeugaußen nach fahrzeuginnen angeordnet: ein die Radnabe lagernder Achsschenkel, welcher in einen Rohrabschnitt 20 übergeht, ein mit dem Rohrabschnitt 20 fest verbundener Ringflansch 21, ein das Getriebe aufnehmendes Gehäuse 65, und ein den Elektromotor aufnehmendes Motorgehäuse 70. Dieselben Bestandteile weist die Fahrzeugachse 1 symmetrisch noch einmal auf der anderen Fahrzeugseite auf.

Einer der zwei Elektromotoren übernimmt den Antrieb auf der einen, und der andere Elektromotor den Antrieb auf der anderen Fahrzeugseite. Die Elektromotoren sind in einem gemeinsamen Motorgehäuse oder in jeweils eigenen Motorgehäusen 70 angeordnet. Die Fahrzeugachse 1 ist daher eine insgesamt kompakte Baueinheit mit integriertem Elektroantrieb, wobei sich alle Elemente auf der einheitlichen Achslinie A befinden.

Starr miteinander verbunden sind, mittels in Achsrichtung sich erstreckender Verschraubungen, der Ringflansch 21 mit dem das Getriebe aufnehmenden Gehäuse 65. Das Gehäuse 65 ist wiederum mit dem Motorgehäuse 70 axial verschraubt.

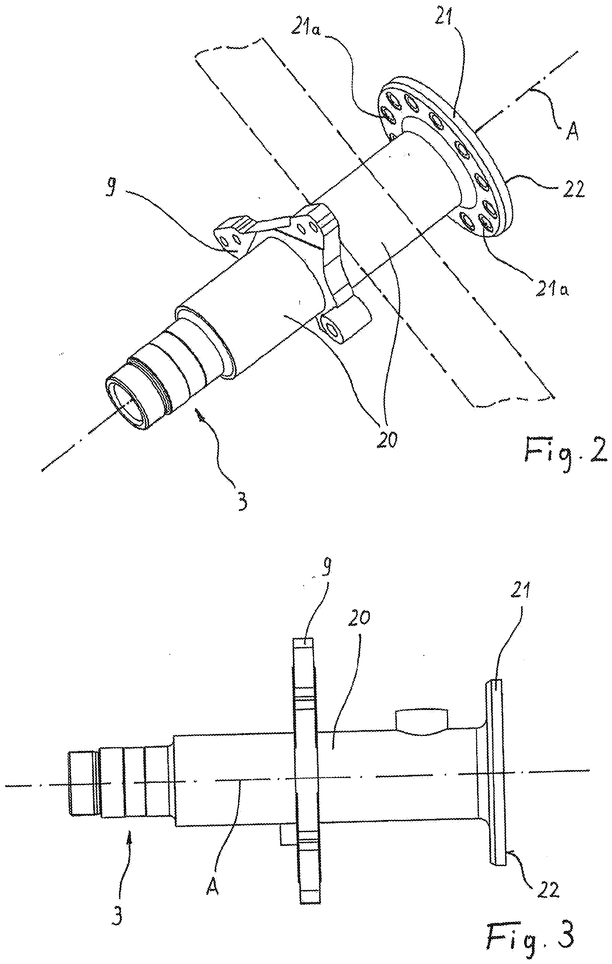

Die Figuren 2 und 3 zeigen in Einzeldarstellung den äußeren Achsabschnitt der Fahrzeugachse 1, also den Achsschenkel, den Rohrabschnitt 20, in dem die vom Getriebe kommende Antriebswelle rotiert, und den Ringflansch 21. Der Ringflansch 21 ist an dem Ende des Rohrabschnitts 20 angeschmiedet, oder ist mit dem Ende des Rohrabschnitts 20 verschweißt. Er ist über seinen Umfang mit einer Vielzahl in Achsrichtung sich erstreckender Schraublöcher 21a versehen, die der Hindurchführung von Schrauben zur axialen Verbindung des Ringflanschs 21 mit dem Getriebegehäuse 65 dienen.

An dem Rohrabschnitt 20 ist über nicht dargestellte Klemmmittel der sich in Fahrzeuglängsrichtung erstreckende Längslenker des Fahrwerks befestigt. Der Längslenker ist in Fig. 2 durch zwei Strichlinien angedeutet. Er kann auch eine konventionelle Blattfederung sein. Außerdem ist an dem Rohrabschnitt 20 oder alternativ an dem Achsschenkel ein Bremsträger 9 befestigt, welcher den Sattel der Scheibenbremse 6 (Fig. 1) trägt. Die Scheibenbremse 6 ist hier eine druckluftbetätigte Scheibenbremse.

An der nach fahrzeuginnen gerichteten Flanschfläche des Ringflanschs 21 ist das Getriebegehäuse 65 befestigt. Die Befestigung erfolgt über die axial sich erstreckenden Schrauben, welche sich durch Schraublöcher 21a in dem Ringflansch 21 erstrecken, und welche mit ihrem Gewinde in dazu fluchtende Schraublöcher 65a in einem Anschlussflansch 64 des Getriebegehäuses 65 eingreifen. Die Schraubenköpfe der Schrauben stützen sich von fahrzeugaußen her an dem Ringflansch 21 ab.

Die Schrauben und Schraublöcher 21a, 65a sind in ungleichen Umfangsabständen über den Ringflansch 21 und über den korrespondierenden Anschlussflansch 64 des Getriebegehäuses 65 verteilt angeordnet.

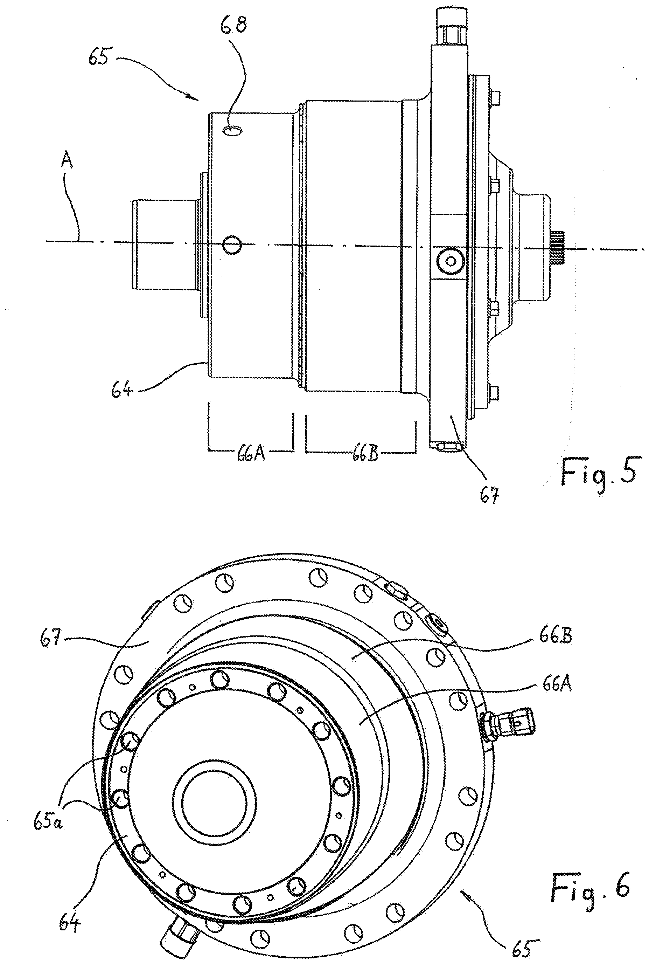

Die Figuren 5 und 6 zeigen jenen Achsabschnitt der Fahrzeugachse, welcher als Getriebegehäuse 65 dient. Darin befindet sich vorzugsweise ein Planetengetriebe. Das Gehäuse 65 erstreckt sich, da es Bestandteil der Fahrzeugachse 1 ist, ebenfalls auf der Achslinie A. Es setzt sich zusammen aus einem ersten Gehäuseabschnitt 66A, einem zweiten Gehäuseabschnitt 66B und einem Gehäuseflansch 67. Der Gehäuseflansch 67 verbindet das Getriebegehäuse 65 mit dem Motorgehäuse 70.

Die Gehäuseabschnitte 66A, 66B sind jeweils zylindrisch in Bezug auf die Achslinie A, weisen jedoch unterschiedliche Durchmesser auf. Insbesondere hat das Getriebegehäuse 65 auf dem Gehäuseabschnitt 66B einen größeren Durchmesser als auf dem an dem Ringflansch 21 befestigten Gehäuseabschnitt 66A.

Um das Getriebegehäuse 65 herum ist ein ringförmiges Anschlusselement 30 angeordnet. Das Anschlusselement 30 umgibt das Getriebegehäuse 65 nur auf dessen Gehäuseabschnitt 66A. Die axiale Länge des Anschlusselements 30 ist im Wesentlichen gleich der axialen Länge des Gehäuseabschnitts 66A.

Die nach fahrzeugaußen gerichtete Stirnseite 31A des Anschlusselements 30 befindet sich im Wesentlichen in der Ebene, in welcher der Ringflansch 21 gegen den Anschlussflansch 64 des Getriebegehäuses 65 anliegt.

Die nach fahrzeuginnen gerichtete Stirnseite 31B des Anschlusselements 30 befindet sich im Wesentlichen in der Ebene, in welcher sich der stufige Übergang zwischen dem Gehäuseabschnitt 66A geringeren und dem Gehäuseabschnitt 66B größeren Durchmessers befindet. Das Anschlusselement 30 kann gegen diesen stufigen Übergang axial abgestützt sein.

Bei dem hier beschriebenen Ausführungsbeispiel ist das Anschlusselement 30 ein über seinen Umfang geschlossener Vollring. Seine Ringform ist bestimmt durch die nach fahrzeugaußen gerichtete Stirnseite 31A, die hierzu parallele und nach fahrzeuginnen gerichtete Stirnseite 31B, den nach radial innen gerichteten Innenmantel 32 und den nach radial außen gerichteten Außenmantel 33.

Der Innenmantel 32 des Anschlusselements 30 ist zumindest bereichsweise mit Flächen für die radiale Abstützung gegen das Gehäuse 65 versehen. Beim Ausführungsbeispiel ist der Innenmantel 32 zylindrisch in Bezug auf die Achslinie A gestaltet. Dabei ist der Durchmesser des Innenmantels 32, bis auf das montagetechnisch notwendige Spiel, gleich dem Durchmesser des Gehäuseabschnitts 66A, so dass das Anschlusselement 30 in montiertem Zustand im Wesentlichen spielfrei auf dem Gehäuseabschnitt 66A sitzt.

Der Innenmantel 32 kann mit einer aufgerauten Oberfläche versehen sein, welche die Haftreibung zwischen den Kontaktflächen erhöht, etwa durch gehärtete Spitzen, welche sich in die gegenüberliegende Oberfläche eingraben.

Sind Innenmantel 32 und Gehäuseabschnitt 66A zylindrisch, kann das Anschlusselement 30 auf dem Gehäuseabschnitt 66A radial aufgeschrumpft sein. Dazu ist es erforderlich, vor der Montage das Anschlusselement 30 zu erhitzen, so dass sich sein Durchmesser aufweitet. Alternativ kann das Anschlusselement 30 in axialer Richtung auf den Gehäuseabschnitt 66A aufgepresst werden. Wird das Anschlusselement 30 radial mit Durchgangsbohrungen 69 und Gehäuseabschnitt 66A mit Sacklochbohrungen 68 versehen, können diese Einheiten miteinander verschraubt werden.

Bei entsprechender Befestigung des Anschlusselements 30 ist es nicht erforderlich, dass dieses in Längsrichtung abgestützt ist, z. B. an Anschlägen. Die Stirnseiten 31A, 31B können zusätzlich dazu dienen, Bauteile, welche die Fahrzeugachse umgeben, axial zu stützen oder diese Bauteile axial zu begrenzen.

Der Außenmantel 33 des ringförmigen Anschlusselements 30 ist nicht zylindrisch gestaltet, da sich auf dem Außenmantel 33 mehrere und unterschiedliche Funktionsbereiche und Funktionsflächen befinden. Insbesondere ist der Außenmantel 33 auf einem Umfangsabschnitt mit einer Anschlussfläche 34 für eine Fahrwerkskomponente versehen, und auf weiteren Umfangsabschnitten mit weiteren Anschlussflächen 35 - 38 für die Befestigung anderer, weiterer Fahrwerkskomponenten versehen.

Unter den Anschlussflächen 34 - 38 ist eine, die der Befestigung bzw. dem Anschluss eines Stoßdämpfers 11 des Fahrwerks dient. An weiteren Anschlussflächen sind ein Stabilisator 12 und eine Bremskonsole 13 anschließbar. Aufgabe der Bremskonsole 13 ist es, daran einen Druckluft-Bremszylinder 14 zu befestigen, welcher das Kraftglied der druckluftbetätigten Scheibenbremse 6 ist.

Aus Anschlussgründen aber auch fertigungstechnischen Gründen kann sich jede Anschlussfläche 34 - 38 über die gesamte, in Achsrichtung gemessene Breite des Anschlusselements 30 erstrecken.

Die Anschlussflächen 34 - 38 können in Umfangsrichtung durch solche Umfangsbereiche getrennt sein, auf denen sich keine Anschlussfläche 34 - 38 befindet. Alternativ kann sich in Umfangsrichtung an eine Anschlussfläche 34 - 38 unmittelbar eine weitere Anschlussfläche 34 - 38 anschließen.

Einzelne der Anschlussflächen können z. B. unter einem Winkel zwischen 0 ° und 45 ° zu einer gedachten Tangente an den Innenmantel 32 angeordnet sein.

Für die Anschlussfläche 35 gilt, dass diese parallel zu einer gedachten Tangente an den Innenmantel 32 angeordnet ist, wobei allerdings die gedachte Flächennormale, welche sich genau im Zentrum der Anschlussfläche 35 befindet, die Achslinie A des Innenmantels 32 nicht schneidet.

Der radiale Abstand der einzelnen Anschlussflächen 34 - 38 zu der Achslinie A kann unterschiedlich sein.

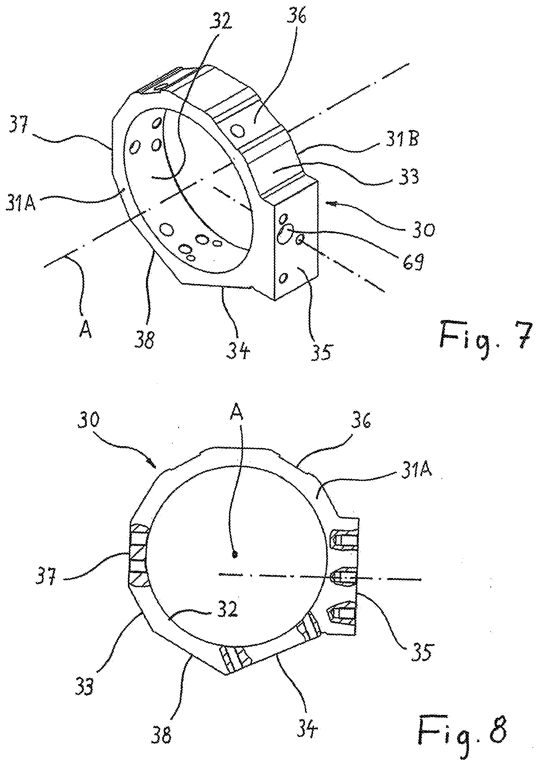

Gemäß den Figuren 7 bis 9 kann die Festlegung ein- und derselben Fahrwerkskomponente, hier am Beispiel einer Konsole 73 für den Stoßdämpfer 11, an zugleich zwei Anschlussflächen 37 und 38 erfolgen.

Zumindest einige der Anschlussflächen 34 - 38 sind als plan gestaltete Umfangsabschnitte des Außenmantels 33 gestaltet. Einzelne Anschlussflächen können je nach ihrer Bestimmung auch konkav, konvex oder sphärisch gestaltet sein.

Die Anschlussflächen können durch Formschlusselemente wie z. B. Schwalbenschwanzverbindungen oder Feder/-Nutverbindungen ergänzt sein. Andere Formschlusselemente an den Anschlussflächen können dort ausgebildete Erhebungen oder Einsenkungen sein. Die Formschlusselemente können dafür ausgebildet sein, die jeweilige Fahrwerkskomponente in Umfangsrichtung, axial und/oder radial festzulegen.

Vorzugsweise mündet in jeder Anschlussfläche 34 - 38 mindestens ein Gewindeloch, um die jeweilige Fahrwerkskomponente mit der Anschlussfläche zu verschrauben.

Nach radial innen ist das Anschlusselement 30 ist mit seinem Innenmantel 32 gegen den darin angeordneten Gehäuseabschnitt 66A des Getriebegehäuses 65 abgestützt. Die Befestigung erfolgt mittels radialer Verschraubungen oder radial sich erstreckender Bolzen.

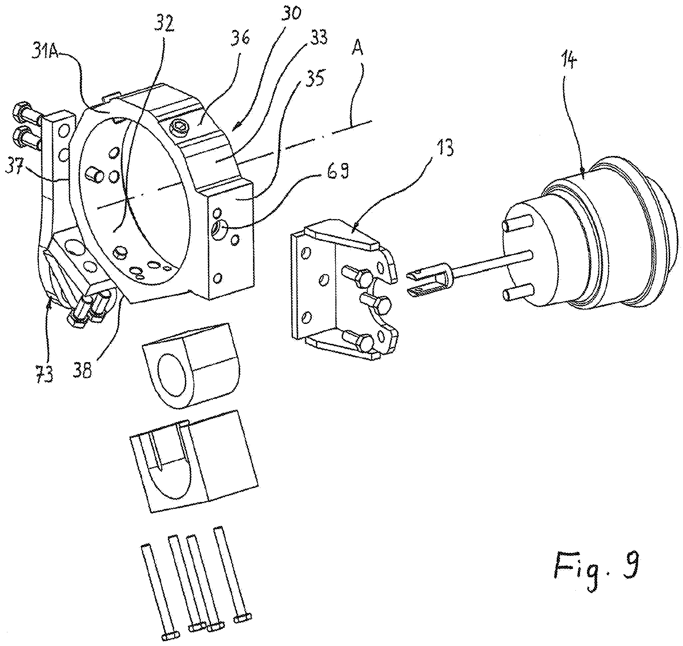

Bei der Befestigung mittels Schrauben erstrecken sich diese durch Durchgangsbohrungen in dem Anschlusselement 30, und sie greifen in Gewindesacklöcher in dem Gehäuseabschnitt 66A ein. Die Durchgangsbohrungen können eine Stufe aufweisen, an der sich die Schraube mit ihrem Schraubenkopf abstützt. Dies führt zu einer versenkten Anordnung der Schraube, so dass gemäß Fig. 7 und Fig. 9 eine darüber angeordnete Anschlussfläche 35 noch für andere Befestigungszwecke zur Verfügung steht.

Gemäß Fig. 8 sind die der Verschraubung des Anschlusselements 30 mit dem Getriebegehäuse 65 dienenden Schrauben in Umfangsrichtung des Anschlusselements 30 in ungleichmäßigen Abständen angeordnet. Gemäß Fig. 7 sind die Schrauben näher zu der einen der beiden Stirnseiten 31A, 31B, als zu der anderen der beiden Stirnseiten angeordnet. Beide Maßnahmen tragen dazu bei, dass sich das Anschlusselement 30 nur in einer, nämlich der richtigen Ausrichtung an dem Gehäuseabschnitt 66A befestigen lässt und Fehlmontagen vermieden werden.

Das Anschlusselement 30 kann aus Stahl bestehen, zum Beispiel der Stahlsorte S355 oder St52, oder aus einem Stahlmaterial mit noch höherer Streckgrenze.

Ein Nutzfahrzeug-Fahrwerk mit der hier beschriebenen Fahrzeugachse 1 ist besonders variabel hinsichtlich der mechanischen Ankopplung unterschiedlicher Fahrwerkskomponenten an der Fahrzeugachse 1. Erreicht wird eine erhöhte Varianz beim Anschließen möglicher Fahrwerkskomponenten. Es besteht die Möglichkeit, an ein- und denselben Grundtyp der Fahrzeugachse 1 je nach geforderter Anwendung die entsprechenden Fahrwerkskomponenten anzuschließen.

Die angestrebte Variabilität kann aber auch in der Möglichkeit bestehen, das Anschlusselement 30 durch ein anderes, mit anderen spezifischen Anschlussflächen versehenes Anschlusselement zu ersetzen. Das Anschlusselement 30 bzw. jedes Anschlusselement 30 ist daher ein Universalelement, an welchem sich an verschiedenen Positionen des Umfangs Fahrwerkskomponenten wie z. B. Stoßdämpfer, Längslenker, Querlenker, Stabilisatoren, eine Bremskonsole oder ein Federelement befestigen lassen. Die Befestigung erfolgt vorzugsweise mittels Verschraubungen.

### Bezugszeichenliste

- 1: Fahrzeugachse
- 3: Radnabenlagerung
- 4: Radnabe
- 5: Bremsscheibe
- 6: Scheibenbremse
- 9: Bremsträger
- 11: Stoßdämpfer
- 12: Stabilisator
- 13: Bremskonsole
- 14: Druckluft-Bremszylinder
- 20: Rohrabschnitt
- 21: Ringflansch
- 21a: Schraubloch
- 22: Ringfläche
- 30: Anschlusselement
- 31A: Stirnseite
- 31B: Stirnseite
- 32: Innenmantel
- 33: Außenmantel
- 34: Anschlussfläche
- 35: Anschlussfläche
- 36: Anschlussfläche
- 37: Anschlussfläche
- 38: Anschlussfläche
- 64: Anschlussflansch
- 65: Gehäuse, Getriebegehäuse
- 65a: Schraubloch
- 66A: Gehäuseabschnitt
- 66B: Gehäuseabschnitt
- 67: Gehäuseflansch
- 68: Sacklochbohrung
- 69: Durchgangsbohrung
- 70: Motorgehäuse
- 73: Konsole

- A: Achslinie

## Patentansprüche

1. Fahrwerk, vorzugsweise Nutzfahrzeug-Fahrwerk, mit einer sich quer zur Fahrzeuglängsrichtung erstreckenden und fahrzeugaußen mit einer Radnabenlagerung (3) versehenen Fahrzeugachse (1), die sich in ihrer Achslängsrichtung aus einzelnen, starr miteinander verbundenen Achsabschnitten zusammensetzt, und mit einem an der Fahrzeugachse (1) befestigten, mindestens eine Fahrwerkskomponente des Fahrwerks tragenden Anschlusselement (30), **dadurch gekennzeichnet, dass** das Anschlusselement (30) als ein Voll- oder Teilring mit einem Innenmantel (32) und einem Außenmantel (33) ausgebildet ist, wobei der Innenmantel (32) zumindest in einzelnen Bereichen gegen einen Achsabschnitt der Fahrzeugachse (1) abgestützt ist, und der Außenmantel (33) auf mindestens einem Umfangsabschnitt mit einer Anschlussfläche (34 - 38) für die Befestigung der Fahrwerkskomponente versehen ist, und dass der Außenmantel (33) zur Befestigung weiterer Fahrwerkskomponenten auf weiteren Umfangsabschnitten mit weiteren Anschlussflächen (34 - 38) versehen ist.

2. Fahrwerk nach Anspruch 1, **dadurch gekennzeichnet, dass** die Fahrwerkskomponente ein Stoßdämpfer (11) ist.

3. Fahrwerk nach Anspruch 1 oder 2, **dadurch gekennzeichnet, dass** die Fahrwerkskomponente ein Stabilisator (12), eine Bremskonsole (13), eine Stoßdämpferkonsole oder ein Federelement ist.

4. Fahrwerk nach einem der vorangehenden Ansprüche, **dadurch gekennzeichnet, dass** sich die oder jede Anschlussfläche (34 - 38) über die gesamte Breite des Anschlusselements (30) erstreckt.

5. Fahrwerk nach einem der vorangehenden Ansprüche, **dadurch gekennzeichnet, dass** die oder jede Anschlussfläche (34 - 38) ein plan gestalteter Umfangsabschnitt des Außenmantels (33) ist.

6. Fahrwerk nach einem der vorangehenden Ansprüche, **dadurch gekennzeichnet, dass** in jede Anschlussfläche (34 - 38) mindestens ein Gewindeloch mündet.

7. Fahrwerk nach einem der vorangehenden Ansprüche, **dadurch gekennzeichnet, dass** das Anschlusselement (30) mit seinem Innenmantel (32) radial gegen einen Gehäuseabschnitt (66A) eines noch weitere Gehäuseabschnitte umfassenden Gehäuses (65) abgestützt ist.

8. Fahrwerk nach Anspruch 7, **dadurch gekennzeichnet, dass** das Anschlusselement (30) über Schrauben oder Bolzen mit dem Gehäuseabschnitt (66A) verbunden ist.

9. Fahrwerk nach Anspruch 8, **dadurch gekennzeichnet, dass** die Schrauben bzw. Bolzen radial in Bezug auf die Achslinie (A) der Fahrzeugachse (1) angeordnet sind.

10. Fahrwerk nach Anspruch 8 oder 9, **dadurch gekennzeichnet, dass** sich die Schrauben bzw. Bolzen durch Durchgangsbohrungen in dem Anschlusselement (30) erstrecken.

11. Fahrwerk nach einem der Ansprüche 8 - 10, **dadurch gekennzeichnet, dass** die Schrauben bzw. Bolzen in Gewindesacklöcher in dem Gehäuseabschnitt (66A) eingreifen.

12. Fahrwerk nach einem der Ansprüche 8 - 11, **dadurch gekennzeichnet, dass** die Schrauben bzw. Bolzen in Umfangsrichtung des Anschlusselements (30) in ungleichmäßigen Abständen angeordnet sind.

13. Fahrwerk nach einem der Ansprüche 8 - 12, **dadurch gekennzeichnet, dass** sich das Anschlusselement (30) in Längsrichtung der Fahrzeugachse (1) zwischen einer ersten Stirnseite (31A) und einer zweiten Stirnseite (31B) erstreckt, und dass die Schrauben bzw. Bolzen näher zu einer der Stirnseiten, als zu der anderen der Stirnseiten angeordnet sind.

14. Fahrwerk nach Anspruch 13, **dadurch gekennzeichnet, dass** die Stirnseiten (31A, 31B) parallel zueinander sind.

15. Fahrwerk nach einem der Ansprüche 7 - 14, **dadurch gekennzeichnet, dass** der Innenmantel (32) und der Gehäuseabschnitt (66A) jeweils zylindrisch gestaltet sind.

16. Fahrwerk nach einem der Ansprüche 7 - 15, **dadurch gekennzeichnet, dass** das Gehäuse (65) ein Getriebegehäuse als Bestandteil eines elektrischen Fahrantriebs ist.

17. Anschlusselement (30) für die Verwendung an einer Fahrzeugachse, welches als ein Voll- oder Teilring mit einem Innenmantel (32) und einem Außenmantel (33) ausgebildet ist, wobei an dem Innenmantel (32) zumindest bereichsweise Flächen für die Abstützung gegen einen Achsabschnitt der Fahrzeugachse ausgebildet sind, und wobei der Außenmantel (33) auf mindestens einem Umfangsabschnitt mit einer Anschlussfläche (34 - 38) für die Befestigung einer Fahrwerkskomponente versehen ist, und wobei der Außenmantel (33) zur Befestigung weiterer Fahrwerkskomponenten auf weiteren Umfangsabschnitten mit weiteren Anschlussflächen (34 - 38) versehen ist.

18. Anschlusselement (30) nach Anspruch 17, **dadurch gekennzeichnet, dass** sich die oder jede Anschlussfläche (34 - 38) über die gesamte Breite des Anschlusselements (30) erstreckt.

19. Anschlusselement (30) nach Anspruch 17 oder 18, **dadurch gekennzeichnet, dass** zumindest eine Anschlussfläche (34 - 38) ein plan gestalteter Umfangsabschnitt des Außenmantels (33) ist.

20. Anschlusselement (30) nach einem der Ansprüche 17 - 19, **dadurch gekennzeichnet, dass** die Anschlussfläche unter einem Winkel zwischen 0 ° und 45 ° und vorzugsweise zwischen 3 ° und 45 ° zu einer gedachten Tangente an den Innenmantel (32) angeordnet ist.

21. Anschlusselement (30) nach einem der Ansprüche 17 - 19, **dadurch gekennzeichnet, dass** die Anschlussfläche parallel zu einer gedachten Tangente an den Innenmantel (32) angeordnet ist, wobei die Flächennormale im Zentrum dieser Anschlussfläche die Achslinie (A) des Innenmantels (32) nicht schneidet.

22. Anschlusselement (30) nach einem der Ansprüche 17 - 21, **dadurch gekennzeichnet, dass** eine erste Anschlussfläche (34) einen anderen Abstand zu dem Innenmantel (32) hat, als eine zweite Anschlussfläche (35).

23. Anschlusselement (30) nach einem der Ansprüche 17 - 22, **dadurch gekennzeichnet, dass** in mindestens eine der Anschlussflächen (34 - 38) mindestens ein Gewindeloch mündet.

24. Anschlusselement (30) nach einem der Ansprüche 17 - 23, **gekennzeichnet durch** radiale Durchgangsbohrungen zum Verschrauben des Anschlusselements (30) mit einem Achsabschnitt der Fahrzeugachse.

25. Anschlusselement (30) nach Anspruch 24, **dadurch gekennzeichnet, dass** sich das Anschlusselement (30) zwischen einer ersten Stirnseite (31A) und einer zweiten Stirnseite (31B) erstreckt, und dass die Durchgangsbohrungen näher zu einer der Stirnseiten, als zu der anderen der Stirnseiten angeordnet sind.

## Claims

1. Chassis, preferably commercial vehicle chassis, having a vehicle axle (1) which extends transversely to the vehicle longitudinal direction, is provided with a wheel hub bearing (3) on the outside of the vehicle and is composed of individual, rigidly connected axle portions in its axle longitudinal direction, and having a connecting element (30) which is attached to the vehicle axle (1) and carries at least one chassis component of the chassis, **characterized in that** the connecting element (30) is designed as a full or partial ring having an inner casing (32) and an outer casing (33), the inner casing (32) being supported, at least in individual regions, against an axle portion of the vehicle axle (1), and the outer casing (33) being provided, on at least one circumferential portion, with a connecting surface (34 - 38) for attaching the chassis component, and **in that** the outer casing (33) is provided, on further circumferential portions, with further connecting surfaces (34 - 38) for attaching further chassis components.

2. Chassis according to claim 1, **characterized in that** the chassis component is a shock absorber (11).

3. Chassis according to either claim 1 or claim 2, **characterized in that** the chassis component is a stabilizer (12), a brake bracket (13), a shock absorber bracket or a spring element.

4. Chassis according to any of the preceding claims, **characterized in that** the or each connecting surface (34 - 38) extends over the entire width of the connecting element (30).

5. Chassis according to any of the preceding claims, **characterized in that** the or each connecting surface (34 - 38) is a planar circumferential portion of the outer casing (33).

6. Chassis according to any of the preceding claims, **characterized in that** at least one threaded hole opens into each connecting surface (34 - 38).

7. Chassis according to any of the preceding claims, **characterized in that** the inner casing (32) of the connecting element (30) is supported radially against a housing portion (66A) of a housing (65) comprising further housing portions.

8. Chassis according to claim 7, **characterized in that** the connecting element (30) is connected to the housing portion (66A) via screws or bolts.

9. Chassis according to claim 8, **characterized in that** the screws or bolts are arranged radially in relation to the axle line (A) of the vehicle axle (1).

10. Chassis according to either claim 8 or claim 9, **characterized in that** the screws or bolts extend through through-holes in the connecting element (30).

11. Chassis according to any of claims 8 - 10, **characterized in that** the screws or bolts engage in threaded blind holes in the housing portion (66A).

12. Chassis according to any of claims 8 - 11, **characterized in that** the screws or bolts are arranged at uneven distances in the circumferential direction of the connecting element (30).

13. Chassis according to any of claims 8 - 12, **characterized in that** the connecting element (30) extends in the longitudinal direction of the vehicle axle (1) between a first end face (31A) and a second end face (31B), and **in that** the screws or bolts are arranged closer to one of the end faces than to the other of the end faces.

14. Chassis according to claim 13, **characterized in that** the end faces (31A, 31B) are parallel to one another.

15. Chassis according to any of claims 7 - 14, **characterized in that** the inner casing (32) and the housing portion (66A) are each cylindrical.

16. Chassis according to any of claims 7 - 15, **characterized in that** the housing (65) is a gear mechanism housing as a component of an electric traction drive.

17. Connecting element (30) for use on a vehicle axle, which element is designed as a full or partial ring having an inner casing (32) and an outer casing (33), surfaces for supporting against an axle portion of the vehicle axle being formed, at least in regions, on the inner casing (32), and the outer casing (33) being provided, on at least one circumferential portion, with a connecting surface (34 - 38) for attaching a chassis component, and the outer casing (33) being provided, on further circumferential portions, with further connecting surfaces (34 - 38) for attaching further chassis components.

18. Connecting element (30) according to claim 17, **characterized in that** the or each connecting surface (34 - 38) extends over the entire width of the connecting element (30).

19. Connecting element (30) according to either claim 17 or claim 18, **characterized in that** at least one connecting surface (34 - 38) is a planar circumferential portion of the outer casing (33).

20. Connecting element (30) according to any of claims 17 - 19,
**characterized in that** the connecting surface is arranged at an angle between 0° and 45°, and preferably between 3° and 45°, to an imaginary tangent to the inner casing (32).

21. Connecting element (30) according to any of claims 17 - 19,
**characterized in that** the connecting surface is parallel to an imaginary tangent to the inner casing (32), the surface normal in the center of this connecting surface not intersecting the axle line (A) of the inner casing (32).

22. Connecting element (30) according to any of claims 17 - 21,
**characterized in that** a first connecting surface (34) has a distance from the inner casing (32) which is different from a second connecting surface (35).

23. Connecting element (30) according to any of claims 17 - 22,
**characterized in that** at least one threaded hole opens into at least one of the connecting surfaces (34-38).

24. Connecting element (30) according to any of claims 17 - 23,
**characterized by** radial through-holes for screwing the connecting element (30) to an axle portion of the vehicle axle.

25. Connecting element (30) according to claim 24, **characterized in that** the connecting element (30) extends between a first end face (31A) and a second end face (31B), and **in that** the through-holes are arranged closer to one of the end faces than to the other of the end faces.

## Revendications

1. Train de roulement, de préférence train de roulement de véhicule utilitaire, avec un essieu de véhicule (1) s'étendant transversalement à la direction longitudinale de véhicule et pourvu à l'extérieur du véhicule d'un palier de moyeu de roue (3), qui se compose dans sa direction longitudinale d'essieu de sections d'essieu individuelles reliées rigidement les unes aux autres, et avec un élément de raccordement (30) fixé à l'essieu de véhicule (1) et portant au moins un composant de train de roulement du train de roulement, **caractérisé en ce que** l'élément de raccordement (30) est réalisé sous la forme d'un anneau plein ou partiel avec une enveloppe intérieure (32) et une enveloppe extérieure (33), dans lequel l'enveloppe intérieure (32) est appuyée au moins dans des zones individuelles contre une section d'axe de l'axe de véhicule (1), et l'enveloppe extérieure (33) est pourvue sur au moins une section périphérique d'une surface de raccordement (34 - 38) pour la fixation du composant de train de roulement, et **en ce que** l'enveloppe extérieure (33) est pourvue d'autres surfaces de raccordement (34 - 38) pour la fixation d'autres composants de train de roulement sur d'autres sections périphériques.

2. Train de roulement selon la revendication 1, **caractérisé en ce que** le composant de train de roulement est un amortisseur (11).

3. Train de roulement selon la revendication 1 ou 2, **caractérisé en ce que** le composant de train de roulement est une barre stabilisatrice (12), une console de frein (13), une console d'amortisseur ou un élément de ressort.

4. Train de roulement selon l'une quelconque des revendications précédentes, **caractérisé en ce que** la ou chaque surface de raccordement (34 - 38) s'étend sur toute la largeur de l'élément de raccordement (30).

5. Train de roulement selon l'une quelconque des revendications précédentes, **caractérisé en ce que** la ou chaque surface de raccordement (34-38) est une section périphérique de forme plane de l'enveloppe extérieure (33).

6. Train de roulement selon l'une quelconque des revendications précédentes, **caractérisé en ce qu'**au moins un trou fileté débouche dans chaque surface de raccordement (34 - 38) .

7. Train de roulement selon l'une quelconque des revendications précédentes, **caractérisé en ce que** l'élément de raccordement (30) est appuyé radialement avec son enveloppe intérieure (32) contre une section de carter (66A) d'un carter (65) comprenant encore d'autres sections de carter.

8. Train de roulement selon la revendication 7, **caractérisé en ce que** l'élément de raccordement (30) est relié à la section de carter (66A) par des vis ou des boulons.

9. Train de roulement selon la revendication 8, **caractérisé en ce que** les vis ou les boulons sont disposés radialement par rapport à la ligne d'axe (A) de l'essieu de véhicule (1).

10. Train de roulement selon la revendication 8 ou 9, **caractérisé en ce que** les vis ou les boulons s'étendent à travers des trous traversants dans l'élément de raccordement (30) .

11. Train de roulement selon l'une quelconque des revendications 8 à 10, **caractérisé en ce que** les vis ou les boulons s'engagent dans des trous borgnes filetés dans la section de carter (66A).

12. Train de roulement selon l'une quelconque des revendications 8 à 11, **caractérisé en ce que** les vis ou les boulons sont disposés à intervalle non régulier dans la direction périphérique de l'élément de raccordement (30).

13. Train de roulement selon l'une quelconque des revendications 8 à 12, **caractérisé en ce que** l'élément de raccordement (30) s'étend dans la direction longitudinale de l'essieu de véhicule (1) entre une première face frontale (31A) et une deuxième face frontale (31B), et **en ce que** les vis ou les boulons sont disposés plus près de l'une des faces frontales que de l'autre des faces frontales.

14. Train de roulement selon la revendication 13, **caractérisé en ce que** les faces frontales (31A, 31B) sont parallèles entre elles.

15. Train de roulement selon l'une quelconque des revendications 7 à 14, **caractérisé en ce que** l'enveloppe interne (32) et la section de carter (66A) sont chacune de forme cylindrique.

16. Train de roulement selon l'une quelconque des revendications 7 à 15, **caractérisé en ce que** le carter (65) est un carter de transmission faisant partie d'un entraînement électrique de conduite.

17. Elément de raccordement (30) destiné à être utilisé sur un essieu de véhicule, lequel est réalisé sous la forme d'un anneau plein ou partiel avec une enveloppe intérieure (32) et une enveloppe extérieure (33), dans lequel des surfaces pour l'appui contre une section d'essieu de l'essieu de véhicule sont réalisées au moins par endroits sur l'enveloppe intérieure (32), et dans lequel l'enveloppe extérieure (33) est pourvue, sur au moins une section périphérique, d'une surface de raccordement (34 - 38) pour la fixation d'un composant de train de roulement, et dans lequel l'enveloppe extérieure (33) est pourvue d'autres surfaces de raccordement (34 - 38) pour la fixation d'autres composants de train de roulement sur d'autres sections périphériques.

18. Elément de raccordement (30) selon la revendication 17, **caractérisé en ce que** la ou chaque surface de raccordement (34 - 38) s'étend sur toute la largeur de l'élément de raccordement (30).

19. Elément de raccordement (30) selon la revendication 17 ou 18, **caractérisé en ce qu'**au moins une surface de raccordement (34 - 38) est une section périphérique de forme plane de l'enveloppe extérieure (33).

20. Elément de raccordement (30) selon l'une quelconque des revendications 17 à 19, **caractérisé en ce que** la surface de raccordement est disposée selon un angle compris entre 0° et 45° et de préférence entre 3° et 45° par rapport à une tangente imaginaire à l'enveloppe intérieure (32).

21. Elément de raccordement (30) selon l'une quelconque des revendications 17 à 19, **caractérisé en ce que** la surface de raccordement est disposée parallèlement à une tangente imaginaire à l'enveloppe intérieure (32), dans lequel la normale à la surface au centre de cette surface de raccordement ne coupe pas la ligne axiale (A) de l'enveloppe intérieure (32).

22. Elément de raccordement (30) selon l'une quelconque des revendications 17 à 21, **caractérisé en ce qu'**une première surface de raccordement (34) est à une distance différente de l'enveloppe intérieure (32) qu'une deuxième surface de raccordement (35).

23. Elément de raccordement (30) selon l'une quelconque des revendications 17 à 22, **caractérisé en ce qu'**au moins un trou taraudé débouche dans au moins l'une des surfaces de raccordement (34 - 38).

24. Elément de raccordement (30) selon l'une quelconque des revendications 17 à 23, **caractérisé par** des trous traversants radiaux pour le vissage de l'élément de raccordement (30) à une section d'essieu de l'essieu de véhicule.

25. Elément de raccordement (30) selon la revendication 24, **caractérisé en ce que** l'élément de raccordement (30) s'étend entre une première face frontale (31A) et une deuxième face frontale (31B), et **en ce que** les trous traversants sont situés plus près de l'une des faces frontales que de l'autre des faces frontales.
